# FASCICULE DE BREVET EUROPEEN

(11) **EP 4 219 312 B1**
(45) Date de publication et mention de la délivrance du brevet: **13.03.2024**
(21) Numéro de dépôt: 23151660.0
(22) Date de dépôt: 16.01.2023
(51) Int. Cl.: B64D 29/06, B64D 33/10, F02C 7/18, F02C 7/20, B64D 27/26

(54) **ENSEMBLE POUR AÉRONEF COMPORTANT UN MÂT ET UN ÉCHANGEUR THERMIQUE FIXÉ SUR LE MÂT PAR L'INTERMÉDIAIRE D'UN MODULE SUPPORT**
ANORDNUNG FÜR EIN FLUGZEUG MIT EINEM MAST UND EINEM AM MAST BEFESTIGTEN WÄRMETAUSCHER MIT EINEM TRÄGERMODUL
ASSEMBLY FOR AN AIRCRAFT COMPRISING A MAST AND A HEAT EXCHANGER FIXED TO THE MAST VIA A SUPPORT MODULE

(30) Priorité: 26.01.2022 FR 2200648
(43) Date de publication de la demande: 02.08.2023
(73) Titulaire: AIRBUS OPERATIONS (S.A.S.), 31060 Toulouse (FR)
(72) Inventeur: GUILLOT, Laurent, 31060 TOULOUSE (FR); RENAUD, Eric, 31300 TOULOUSE (FR); ROSSI, Frédéric, 31060 TOULOUSE (FR); DEFORET, Thomas, 31060 TOULOUSE (FR); SOULIE, Adeline, 31060 TOULOUSE (FR); GACHES, Thierry, 31060 TOULOUSE (FR); KALETA, Mathieu, 31300 TOULOUSE (FR); PUECH, Jacky, 31060 TOULOUSE (FR)
(74) Mandataire: Airbus-OPS SAS

(56) Documents cités:
- CA-A1- 3 006 128
- FR-A1- 3 100 269
- US-A1- 2012 298 835
- US-A1- 2019 226 400
- US-B2- 8 161 755

## Description

La présente invention concerne un ensemble pour un aéronef où ledit ensemble comporte un mât et un échangeur thermique fixé sur le mât par l'intermédiaire d'un module support. L'invention concerne également un aéronef comportant au moins un tel ensemble.

Un aéronef comporte classiquement un turboréacteur qui est fixé sous une aile de l'aéronef à l'aide d'un mât. Le turboréacteur est entouré de capots qui sont montés articulés par l'intermédiaire d'une pluralité de charnières, en particulier de quatre charnières, qui sont réparties par exemple en deux charnières dites flottantes à l'avant et de deux charnières dites fixes à l'arrière qui sont fixées sur le mât.

Pour le fonctionnement de l'aéronef, il est nécessaire de mettre en place des échangeurs thermiques par exemple pour garantir le confort des passagers ou pour dégeler les surfaces extérieures de l'aéronef telles que la voilure.

Un tel échangeur thermique est généralement fixé sur le mât par des pattes de fixation. L'échangeur thermique est alimenté, d'une part, en air chaud provenant du canal primaire traversant le noyau du turboréacteur, et, d'autre part, en air froid provenant du canal secondaire du turboréacteur. L'air chaud est refroidi par l'air froid et canalisé vers la voilure. L'air froid est réchauffé et canalisé vers l'extérieur.

Un tel échangeur thermique est logé dans une structure secondaire qui est au-dessus du mât et forme la surface aérodynamique au-dessus du mât.

Dans un tel arrangement, l'air chaud va de l'avant vers l'arrière en traversant l'échangeur thermique et l'air froid va du bas vers le haut en traversant l'échangeur thermique.

L'alimentation de l'échangeur thermique en air chaud s'effectue par une première canalisation d'apport qui provient du noyau et traverse de haut en bas le mât et le plancher de la structure secondaire entre les deux charnières flottantes et est connectée à l'échangeur thermique au niveau d'une partie avant de celui-ci.

L'alimentation de l'échangeur thermique en air froid s'effectue par une deuxième canalisation d'apport qui provient du canal secondaire et traverse le plancher de la structure secondaire entre la deuxième charnière flottante et la première charnière fixe et est connectée à l'échangeur thermique au niveau d'une partie inférieure de celui-ci.

L'air chaud refroidi est canalisé par une première canalisation de sortie qui canalise l'air vers la voilure par exemple et qui est connectée à l'échangeur thermique au niveau d'une partie arrière de celui-ci. L'air froid réchauffé est canalisé par une deuxième canalisation de sortie qui canalise l'air vers l'extérieur et qui est connectée à l'échangeur thermique au niveau d'une partie supérieure de celui-ci à travers la structure secondaire.

Si un tel arrangement est approprié pour les turboréacteurs actuels, il l'est moins pour les turboréacteurs plus gros avec un taux de dilution plus important. En effet, du fait de l'accroissement des dimensions de l'ensemble de motorisation, la ligne de charnière est amenée à se déplacer vers le haut et les charnières fixes ne peuvent plus être fixées de manière simple au mât.

Un objet de la présente invention est ainsi de proposer un ensemble pour aéronef, ledit ensemble comportant un mât et un échangeur thermique fixé sur le mât par l'intermédiaire d'un module support qui lui-même est équipé de deux charnières fixes pour le montage de capots articulés.

À cet effet, est proposé un ensemble pour un aéronef tel que revendiqué dans la revendication 1. La demande de brevet US2019/226400 décrit le préambule de la revendication 1.

Avec un tel arrangement, l'axe de charnière des capots est surélevé.

L'invention propose également un aéronef tel que revendiqué à la revendication 10.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- La figure 1 est une vue de côté d'un aéronef selon l'invention,
- La figure 2 est une vue en perspective d'un ensemble selon un premier mode de réalisation de l'invention,
- La figure 3 est une vue en perspective d'un ensemble selon un deuxième mode de réalisation de l'invention,
- La figure 4 est une vue de côté de l'ensemble selon le deuxième mode de réalisation de l'invention,
- La figure 5 est une vue en perspective de l'ensemble selon l'invention sans l'échangeur thermique, et
- La figure 6 est une vue de dessus de l'ensemble selon l'invention.

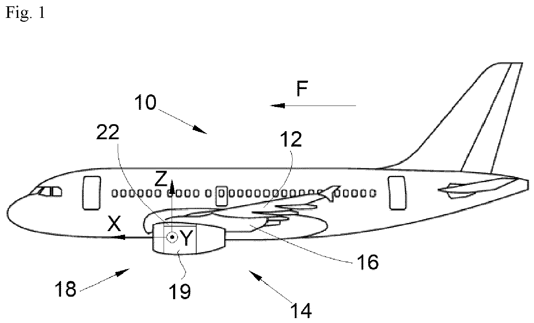

La Fig. 1 montre un aéronef 10 qui comporte un turboréacteur 14 et une aile 12 sous laquelle est fixé le turboréacteur 14 par l'intermédiaire d'un mât 16.

Dans la description qui suit, les termes relatifs à une position sont pris en référence à un aéronef 10 en position normale de vol, c'est-à-dire comme il est représenté sur la Fig. 1 et les positions « avant » et « arrière » sont prises par rapport à l'avant et l'arrière du turboréacteur 14 et de l'aéronef 10 par rapport à la direction d'avancement de l'aéronef 10 lorsque le turboréacteur 14 fonctionne. La flèche F représente la direction d'avancement de l'aéronef 10 en vol.

Dans la description qui suit, et par convention, on appelle X la direction longitudinale du turboréacteur 14 qui est parallèle à l'axe longitudinal dudit turboréacteur, on appelle Y la direction transversale qui est horizontale lorsque l'aéronef 10 est au sol, et Z la direction verticale qui est verticale lorsque l'aéronef 10 est au sol, ces trois directions X, Y et Z étant orthogonales entre elles.

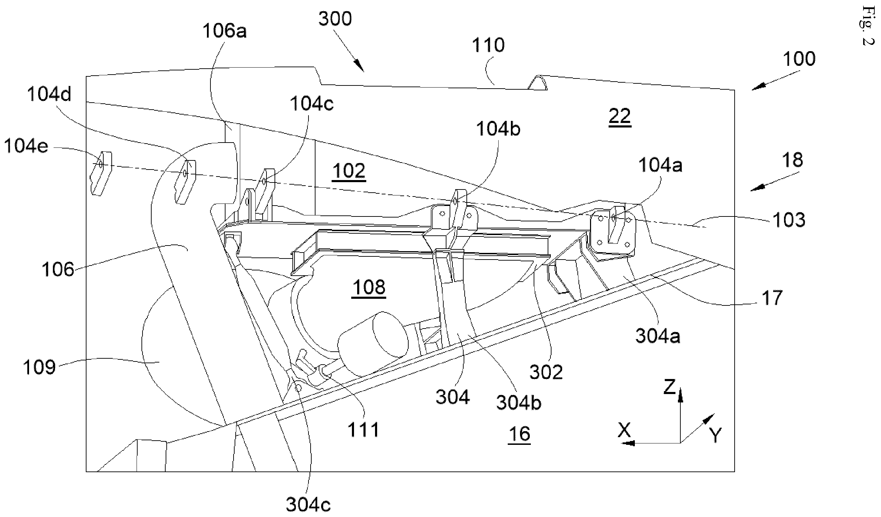

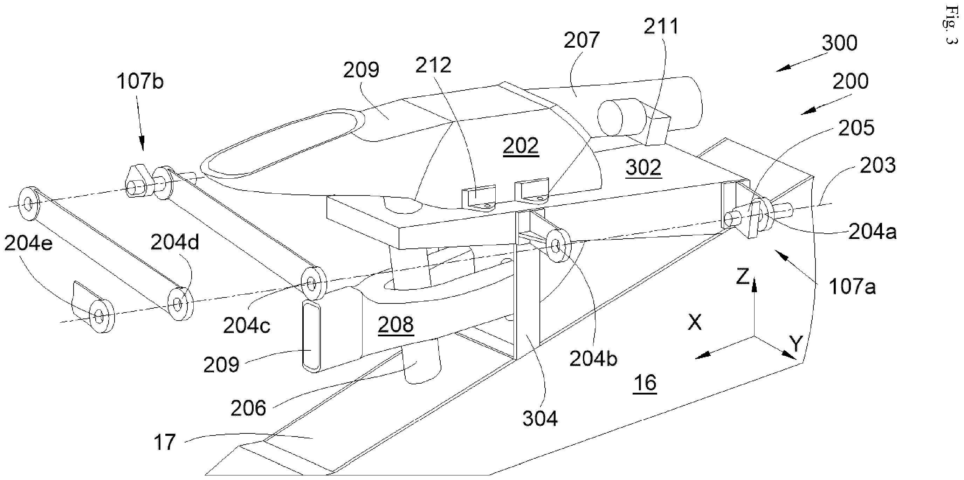

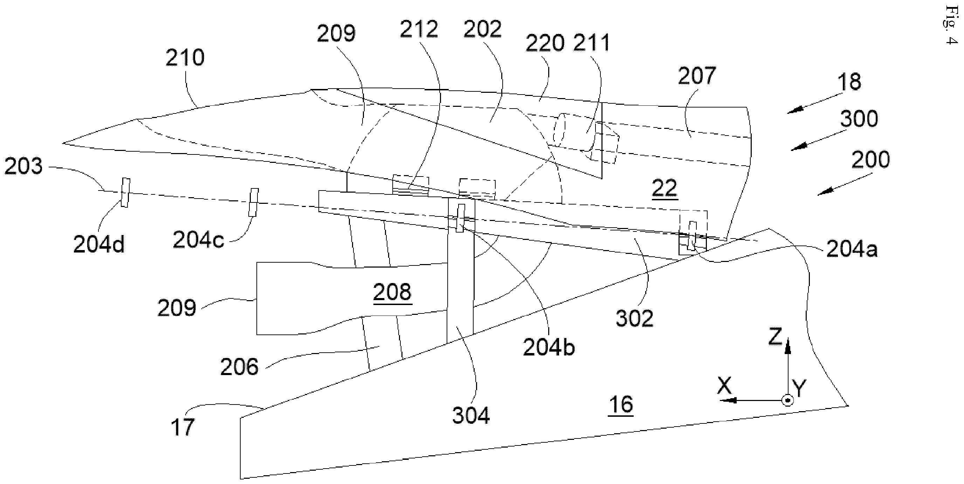

La Fig. 2 montre un ensemble 100 selon un premier mode de réalisation de l'invention et la Fig. 3 et la Fig. 4 montrent un ensemble 200 selon un deuxième mode de réalisation de l'invention. L'ensemble 100, 200 comporte le mât 16 représenté ici par une structure dite primaire et un échangeur thermique 102, 202 qui assure un échange de calories entre un flux d'air chaud et un flux d'air froid comme expliqué ci-dessous.

Le turboréacteur 14 comporte un noyau qui constitue la partie centrale du turboréacteur 14 dans laquelle a lieu la combustion du carburant comme le kérosène et dans lequel s'écoule un flux d'air primaire chaud, et une nacelle 18 qui s'étend autour du noyau et qui délimite avec le noyau, un canal secondaire dans lequel circule un flux d'air secondaire froid provenant de l'extérieur. L'air qui circule dans le canal primaire et l'air qui circule dans le canal secondaire proviennent d'une entrée d'air à l'avant du turboréacteur 14.

La nacelle 18 constitue un élément de l'ensemble 100, 200 et comporte de part et d'autre d'un plan médian vertical XZ, un capot 19 qui est monté articulé sur des charnières 107a-b (pour des raisons de clarté, seulement deux sont représentées sur la Fig. 3) qui sont en particulier au nombre de cinq et comprennent deux charnières dites fixes 107a à l'arrière et trois charnières dites flottantes ou semi-flottantes 107b à l'avant. Chaque groupe de charnières 107a-b définit un axe de charnière 103, 203 passant par lesdites charnières 107a-b. Chaque charnière 107a-b comporte une première ferrure d'articulation 104a-e, 204a-e et une deuxième ferrure d'articulation 205 montée articulée sur la première ferrure d'articulation 104a-e, 204a-e autour de l'axe de charnière 103, 203. Les deuxièmes ferrures d'articulation 205 sont fixées sur le capot 19 et sur les Figs., les premières ferrures d'articulation sont représentées et seulement une des deuxièmes ferrures d'articulation 205 est représentée sur la Fig. 3. Chaque capot 19 est par exemple le capot d'un inverseur de poussée du turboréacteur 14, le capot de soufflante du turboréacteur 14 ou un capot regroupant le capot de l'inverseur de poussée et le capot de soufflante.

La nacelle 18 comporte également une structure secondaire 22 qui forme la partie supérieure de la nacelle 18 et la surface aérodynamique au-dessus du mât 16.

L'échangeur thermique 102, 202 est alimenté, d'une part, en air chaud provenant du noyau, et, d'autre part, en air froid provenant du canal secondaire. L'air chaud est refroidi par l'air froid et canalisé par exemple vers la voilure et l'air froid est réchauffé et canalisé vers l' extérieur.

L'échangeur thermique 102, 202 est logé dans la structure secondaire 22 et au-dessus du mât 16.

Dans le premier mode de réalisation de l'invention, l'air chaud va de l'avant vers l'arrière en traversant l'échangeur thermique 102 et l'air froid va du bas vers le haut en traversant l'échangeur thermique 102.

L'alimentation de l'échangeur thermique 102 en air chaud s'effectue par une première canalisation d'apport 106 qui provient du réacteur et traverse de haut en bas le mât 16 et est connectée à l'échangeur thermique 102 au niveau d'une partie avant 106a de celui-ci.

L'alimentation de l'échangeur thermique 102 en air froid s'effectue par une deuxième canalisation d'apport 108 qui provient du canal de soufflante et est connectée à l'échangeur thermique 102 au niveau d'une partie inférieure de celui-ci. La deuxième canalisation d'apport 108 débouche dans le canal de soufflante par une extrémité 109 orientée ici latéralement.

Dans le premier mode de réalisation de l'invention, la régulation de température à travers l'échangeur thermique 102 est régulée par une vanne motorisée 111 montée à travers la deuxième canalisation d'apport 108 et commandée par une unité de contrôle de l'aéronef 10.

L'air chaud refroidi est canalisé par une première canalisation de sortie (qui n'est pas vue sur la Fig. 2) qui canalise l'air vers la voilure par exemple et qui est connectée à l'échangeur thermique 102 au niveau d'une partie arrière de celui-ci. L'air froid réchauffé est canalisé par une deuxième canalisation de sortie (qui n'est pas vue sur la Fig. 2) qui canalise l'air vers l'extérieur et qui est connectée à l'échangeur thermique 102 au niveau d'une partie supérieure de celui-ci. La deuxième canalisation de sortie débouche à l'extérieur par l'intermédiaire d'une fenêtre 110 dans la structure secondaire 22.

Dans le deuxième mode de réalisation de l'invention, l'air chaud va de l'avant vers l'arrière en traversant l'échangeur thermique 202 et l'air froid va de l'arrière vers l'avant en traversant l'échangeur thermique 202.

L'alimentation de l'échangeur thermique 202 en air chaud s'effectue par une première canalisation d'apport 206 qui provient du réacteur et traverse de haut en bas le mât 16 et est connectée à l'échangeur thermique 202 au niveau d'une partie avant de celui-ci.

L'alimentation de l'échangeur thermique 202 en air froid s'effectue par une deuxième canalisation d'apport 208 qui provient du canal de soufflante et est connectée à l'échangeur thermique 202 au niveau d'une partie arrière de celui-ci. La deuxième canalisation d'apport 208 débouche dans le canal de soufflante par une extrémité 209 orientée ici frontalement.

L'air chaud refroidi est canalisé par une première canalisation de sortie 207 qui canalise l'air vers la voilure par exemple et qui est connectée à l'échangeur thermique 202 au niveau d'une partie arrière de celui-ci. L'air froid réchauffé est canalisé par une deuxième canalisation de sortie 209 qui canalise l'air vers l'extérieur et qui est connectée à l'échangeur thermique 202 au niveau d'une partie avant de celui-ci. La deuxième canalisation de sortie 209 débouche à l'extérieur par l'intermédiaire d'une fenêtre 210 dans la structure secondaire 22.

Dans le deuxième mode de réalisation de l'invention, une vanne motorisée 211 est montée à travers la première canalisation de sortie 207 et commandée par une unité de contrôle de l'aéronef 10 et constitue une vanne de surpression lorsqu'un problème est détecté du côté du turboréacteur 14.

Dans les deux modes de réalisation présentés sur les Figs. 2 à 4, pour fixer l'échangeur thermique 102, 202 au mât 16, et plus particulièrement au-dessus du mât 16, l'ensemble 100, 200 comporte un module de support 300 qui comporte un berceau 302 sur lequel l'échangeur thermique 102, 202 est fixé et des moyens de fixation 304 qui assurent la fixation du berceau 302 au mât 16 et plus particulièrement au-dessus du mât 16.

En position d'utilisation, le berceau 302 est ici sensiblement horizontal. La fixation de l'échangeur thermique 102, 202 sur le berceau 302 est réalisée par tous les moyens connus de l'homme du métier. Par exemple dans le deuxième mode de réalisation, l'ensemble 200 comporte quatre pattes de fixation 212 qui sont ici en L, qui sont solidaires de l'échangeur thermique 202, par exemple par soudage, et fixées par vis au berceau 302 et réparties par paire de part et d'autre du plan médian vertical XZ.

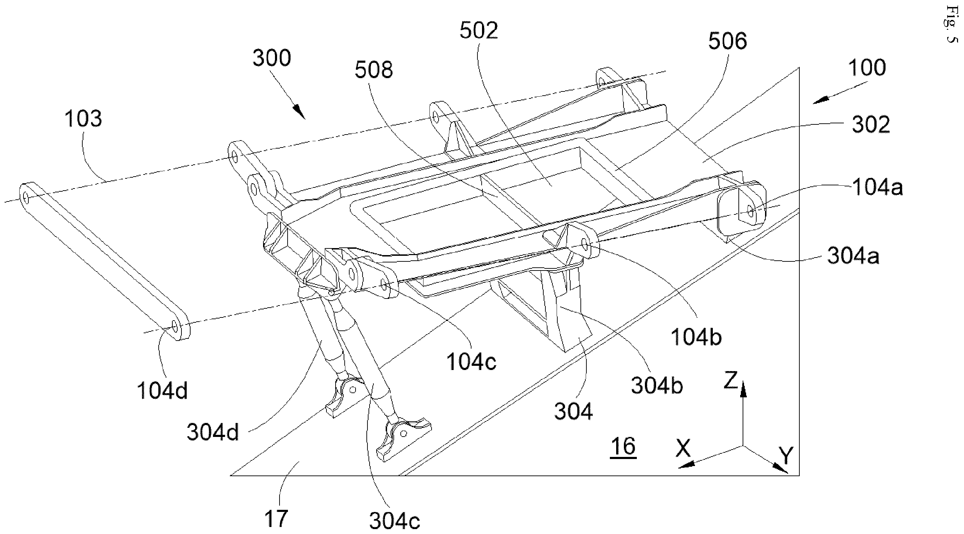

Comme le montre la Fig. 5 pour le premier mode de réalisation, le berceau 302 comporte une ouverture 502 qui est ici scindée en deux par une traverse 508. La deuxième canalisation d'apport 108 est fixée de manière étanche au berceau 302 d'un côté du berceau 302, ici dessous et débouche au niveau de l'ouverture 502, et l'échangeur thermique 102 est fixé de manière étanche au berceau 302 d'un autre côté du berceau 302, ici dessus et débouche également au niveau de l'ouverture 502. Le flux d'air canalisé par la deuxième canalisation d'apport 108 atteint l'échangeur thermique 102 en traversant l'ouverture 502 du berceau 302. L'étanchéité est assurée par exemple par la mise en place d'un joint boudin 506 autour de l'ouverture 502 de chaque côté du berceau 302.

Une architecture similaire est possible pour le deuxième mode de réalisation pour le passage de la deuxième canalisation d'apport 208 et de la première canalisation d'apport 206.

Le module de support 300 comporte également de part et d'autre du plan médian vertical XZ, les deux premières ferrures d'articulation 104a-b, 204a-b des deux charnières fixes 107a qui sont directement solidaires du berceau 302. Chaque première ferrure d'articulation 104a-b, 204a-b est ainsi associée avec une des deuxièmes ferrures d'articulation 205 du capot 19 qui est du même côté du plan médian vertical XZ pour former une charnière fixe 107a.

Ainsi du fait que le berceau 302 est surélevé par rapport au mât 16, les charnières fixes 107a sont positionnées plus haut que le mât 16 ce qui permet de relever l'axe de charnière 103, 203.

Dans le mode de réalisation de la Fig. 5, la traverse 508 arrangée perpendiculairement au plan médian XZ en travers de l'ouverture 502 assure la rigidité du berceau 302 entre deux charnières fixes 107a symétriques l'une de l'autre par rapport au plan médian XZ.

Dans le premier mode de réalisation de l'invention, les moyens de fixation 304 comportent deux ferrures de fixation 304a-b qui s'étendent verticalement et qui sont fixées sur un longeron supérieur 17 du mât 16 entre ledit longeron supérieur 17 et, d'une part, une partie arrière du berceau 302 pour une ferrure de fixation 304a, et, d'autre part, une partie centrale du berceau 302 pour l'autre ferrure de fixation 304b.

Dans le premier mode de réalisation, les moyens de fixation 304 comportent également deux bielles 304c-d disposées de part et d'autre du plan médian vertical XZ et, chaque bielle 304c-d est montée articulée par une première extrémité au longeron supérieur 17 du mât 16 et par une deuxième extrémité à une partie avant du berceau 302. Dans ce mode de réalisation, les bielles 304c-d assurent la tenue en Y et Z du berceau 302 qui est en porte à faux.

Dans le deuxième mode de réalisation, les moyens de fixation 304 comportent une ferrure de fixation 304 qui s'étend verticalement et qui est fixée sur le longeron supérieur 17 du mât 16 entre ledit longeron supérieur 17 et une partie centrale du berceau 302, et une partie arrière du berceau 302 est fixée directement sur le longeron supérieur 17 du mât 16.

Dans le premier mode de réalisation de l'invention, il y a, à l'avant des charnières fixes 107a, et de l'arrière vers l'avant, une charnière semi-flottante 107b et deux charnières flottantes 107b. La charnière semi-flottante 107b entre le capot 19 et le berceau 302 comporte une première ferrure d'articulation 104c et une deuxième ferrure d'articulation 205 montée articulée sur la première ferrure d'articulation 104c autour de l'axe de charnière 103. La deuxième ferrure d'articulation 205 est fixée sur le capot 19 et la première ferrure d'articulation 104c est fixée de manière articulée sur le berceau 302 autour d'un axe de rotation parallèle à l'axe de charnière 103.

Dans le premier mode de réalisation de l'invention, il y a deux charnières flottantes 107b entre les deux capots 19. Chaque charnière flottante 107b comporte une première ferrure d'articulation 104d-e et une deuxième ferrure d'articulation 205 montée articulée sur la première ferrure d'articulation 104d-e autour de l'axe de charnière 103. La deuxième ferrure d'articulation 205 est fixée sur le capot 19 et la première ferrure d'articulation 104d-e constitue la première ferrure d'articulation 104d-e pour le capot 19 disposé symétriquement de l'autre côté du plan médian vertical XZ. La première ferrure d'articulation 104d-e traverse ainsi la partie haute de la nacelle 18 et sans être fixée en dehors des deuxièmes ferrures d'articulation 205 des deux capots 19 comme le montre la Fig. 3 pour le deuxième mode de réalisation.

Bien que cette implémentation de la charnière semi-flottante 107b et des charnières flottantes 107b soit présentée dans le cadre du premier mode de réalisation, elle peut être mise en oeuvre dans le cadre du deuxième mode de réalisation.

Dans le deuxième mode de réalisation de l'invention, il y a, à l'avant des charnières fixes 107a, et de l'arrière vers l'avant, trois charnières flottantes 107b entre les deux capots 19. Chaque charnière flottante 107b comporte une première ferrure d'articulation 204a-c et une deuxième ferrure d'articulation 205 montée articulée sur la première ferrure d'articulation 204a-c autour de l'axe de charnière 203. La deuxième ferrure d'articulation 205 est fixée sur le capot 19 et la première ferrure d'articulation 204a-c constitue la première ferrure d'articulation 204a-c pour le capot 19 disposé symétriquement de l'autre côté du plan médian vertical XZ. La première ferrure d'articulation 204a-c traverse ainsi la partie haute de la nacelle 18 et sans être fixée en dehors des deuxièmes ferrures d'articulation 205 des deux capots 19.

Bien que cette implémentation de charnières flottantes 107b soit présentée dans le cadre du deuxième mode de réalisation, elle peut être mise en oeuvre dans le cadre du premier mode de réalisation.

Dans le deuxième mode de réalisation de l'invention, chaque patte de fixation 212 est fixée par une vis au berceau 302. Les vis sont mises en place parallèlement à la direction verticale depuis le dessus de l'échangeur thermique 202.

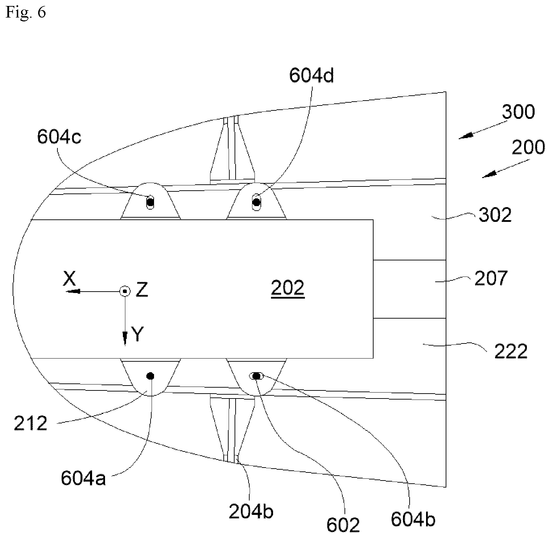

À cette fin, la structure secondaire 22 est percée d'une fenêtre d'accès 222 qui est vue sur la Fig. 6 et qui est disposée verticalement au-dessus de l'échangeur thermique 202 et la structure secondaire 22 comporte un capot échangeur 220 qui ferme ladite fenêtre d'accès 222. Sur la Fig. 6, le capot échangeur 220 n'est pas représenté. Le capot échangeur 220 est fixé de manière amovible à la structure secondaire 22 et son retrait permet d'atteindre l'échangeur thermique 202 afin de l'examiner et le démonter si besoin.

Les vis qui assurent la fixation des pattes de fixation 212 sont accessibles à travers la fenêtre d'accès 222 lorsque le capot échangeur 220 est retiré. Sur la Fig. 6, les vis sont représentées par leurs tiges filetées 602.

Pour autoriser une dilatation en X et Y de l'échangeur thermique 202, il y a quatre vis de fixation réparties par paire de part et d'autre du plan médian vertical XZ et pour chaque vis, il y a une patte de fixation 212.

Chaque patte de fixation 221 est traversée par un alésage qui reçoit la tige filetée 602 d'une vis.

Dans le mode de réalisation de l'invention présenté à la Fig. 6, l'alésage 604a de la première patte de fixation 221 qui est à bâbord avant présente un diamètre ajusté par rapport au diamètre de la tige filetée 602 afin de constituer un point fixe de l'assemblage.

L'alésage 604b de la deuxième patte de fixation 221 qui est à bâbord arrière prend la forme d'un premier trou oblong dont le grand axe est parallèle à la direction longitudinale X et dont la dimension transversale au grand axe est ajustée par rapport au diamètre de la tige filetée 602. Le premier trou oblong permet une dilatation en X.

L'alésage 604c de la troisième patte de fixation 221 qui est à tribord avant prend la forme d'un deuxième trou oblong dont le grand axe est parallèle à la direction transversale Y et dont la dimension transversale au grand axe est ajustée par rapport au diamètre de la tige filetée 602. Le deuxième trou oblong permet une dilatation en Y.

L'alésage 604d de la quatrième patte de fixation 221 qui est à tribord arrière prend la forme d'un troisième trou oblong dont le grand axe est parallèle à la direction transversale Y et dont la dimension transversale au grand axe est large par rapport au diamètre de la tige filetée 602. Le deuxième trou oblong permet une dilatation en X et en Y.

Bien que la fixation particulière décrite ici est faite pour le deuxième mode de réalisation, elle peut s'appliquer de la même manière au premier mode de réalisation.

## Revendications

1. Ensemble (100, 200) pour un aéronef (10), ledit ensemble (100, 200) présentant un plan médian vertical (XZ) et comportant :
- une nacelle (18) d'un turboréacteur (14) de l'aéronef (10), où la nacelle (18) comporte de part et d'autre d'un plan médian vertical (XZ), un capot (19),
- un mât (16) destiné à être fixé entre le turboréacteur (14) et une aile (12) de l'aéronef (10),
- un échangeur thermique (102, 202), et
- un module support (300) comportant un berceau (302) sur lequel l'échangeur thermique (102, 202) est fixé,
**caractérisé en ce qu'**il comprend :
- de part et d'autre du plan médian vertical (XZ), des ferrures d'articulation (205), dites deuxièmes ferrures d'articulation, fixées sur le capot (19),
- des moyens de fixation (304), où les moyens de fixation (304) assurent la fixation du berceau (302) au mât (16) et au-dessus du mât (16),
- de part et d'autre du plan médian vertical (XZ), deux ferrures d'articulation (104a-b, 204a-b), dites premières ferrures d'articulation, directement solidaires du berceau (302), où chaque première ferrure d'articulation (104a-b, 204a-b) est associée avec une des deuxièmes ferrures d'articulation (205) d'un capot (19) pour former une charnière (107a-b).

2. Ensemble (100) selon la revendication 1, **caractérisé en ce que** les moyens de fixation (304) comportent deux ferrures de fixation (304a-b) qui sont fixées sur un longeron supérieur (17) du mât (16) et dont une ferrure de fixation (304a) est fixée entre ledit longeron supérieur (17) et une partie arrière du berceau (302), et, dont une ferrure de fixation (304a) est fixée entre ledit longeron supérieur (17) et une partie centrale du berceau (302), **en ce que** les moyens de fixation (304) comportent également deux bielles (304c-d) disposées de part et d'autre du plan médian vertical (XZ) et **en ce que** chaque bielle (304c-d) est montée articulée par une première extrémité au longeron supérieur (17) et par une deuxième extrémité à une partie avant du berceau (302).

3. Ensemble (200) selon la revendication 1, **caractérisé en ce que** les moyens de fixation (304) comportent une ferrure de fixation (304) qui est fixée sur un longeron supérieur (17) du mât (16) entre ledit longeron supérieur (17) et une partie centrale du berceau (302), et **en ce qu'**une partie arrière du berceau (302) est fixée directement sur le longeron supérieur (17).

4. Ensemble (100, 200) selon l'une des revendications 1 à 3, **caractérisé en ce que** la nacelle (18) comporte également une structure secondaire (22) qui forme la partie supérieure de la nacelle (18), **en ce que** la structure secondaire (22) est percée d'une fenêtre d'accès (222) qui est disposée verticalement au-dessus de l'échangeur thermique (102, 202) et **en ce que** la structure secondaire (22) comporte un capot échangeur (220) qui ferme de manière amovible ladite fenêtre d'accès (222).

5. Ensemble (100, 200) selon la revendication 4, **caractérisé en ce qu'**il comporte quatre pattes de fixation (212) solidaires de l'échangeur thermique (102, 202) et réparties par paire de part et d'autre du plan médian vertical (XZ), et, pour chaque patte de fixation (212), un alésage (604a-d) traverse ladite patte de fixation (212) et permet le passage d'une vis qui fixe la patte de fixation (212) au berceau (302) et qui est accessible à travers la fenêtre d'accès (222) lorsque le capot échangeur (220) est retiré.

6. Ensemble (100, 200) selon la revendication 5, **caractérisé en ce que** l'alésage (604a) de la première patte de fixation (221) qui est à bâbord avant présente un diamètre ajusté par rapport au diamètre de la tige filetée (602) de la vis, **en ce que** l'alésage (604b) de la deuxième patte de fixation (221) qui est à bâbord arrière prend la forme d'un premier trou oblong dont le grand axe est parallèle à une direction longitudinale (X) et dont la dimension transversale au grand axe est ajustée par rapport au diamètre de la tige filetée (602) de la vis, **en ce que** l'alésage (604c) de la troisième patte de fixation (221) qui est à tribord avant prend la forme d'un deuxième trou oblong dont le grand axe est parallèle à une direction transversale (Y) et dont la dimension transversale au grand axe est ajustée par rapport au diamètre de la tige filetée (602) de la vis et **en ce que** l'alésage (604d) de la quatrième patte de fixation (221) qui est à tribord arrière prend la forme d'un troisième trou oblong dont le grand axe est parallèle à la direction transversale (Y) et dont la dimension transversale au grand axe est large par rapport au diamètre de la tige filetée (602) de la vis.

7. Ensemble (100, 200) selon l'une des revendications 1 à 6, **caractérisé en ce qu'**il comporte, de l'arrière vers l'avant, une charnière semi-flottante (107b) entre le capot (19) et le berceau (302) et deux charnières flottantes (107b) entre les deux capots (19).

8. Ensemble (100, 200) selon l'une des revendications 1 à 6, **caractérisé en ce qu'**il comporte, de l'arrière vers l'avant, trois charnières flottantes (107b) entre les deux capots (19).

9. Ensemble (100, 200) selon l'une des revendications 1 à 8, **caractérisé en ce qu'**il comporte une canalisation d'apport (108, 208) qui canalise de l'air, **en ce que** le berceau (302) comporte une ouverture (502), et **en ce que** la canalisation d'apport (108, 208) est fixée de manière étanche au berceau (302) d'un côté du berceau (302) et débouche au niveau de l'ouverture (502), et l'échangeur thermique (102, 202) est fixé de manière étanche au berceau (302) d'un autre côté du berceau (302) et débouche également au niveau de l'ouverture (502).

10. Aéronef (10) comportant un turboréacteur (14), une aile (12) et au moins un ensemble (100, 200) selon l'une des revendications précédentes où le mât (16) est fixé entre le turboréacteur (14) et l'aile (12).

## Patentansprüche

1. Anordnung (100, 200) für ein Luftfahrzeug (10), wobei die Anordnung (100, 200) eine vertikale Mittelebene (XZ) aufweist und umfasst:
- eine Gondel (18) eines Turbostrahltriebwerks (14) des Luftfahrzeugs (10), wobei die Gondel (18) beiderseits einer vertikalen Mittelebene (XZ) eine Haube (19) umfasst,
- einen Pylon (16), der dazu bestimmt ist, zwischen dem Turbostrahltriebwerk (14) und einer Tragfläche (12) des Luftfahrzeugs (10) befestigt zu werden,
- einen Wärmetauscher (102, 202) und
- ein Stützmodul (300), das ein Gestell (302) umfasst, auf dem der Wärmetauscher (102, 202) befestigt ist,
**dadurch gekennzeichnet, dass** sie umfasst:
- beiderseits der Mittelebene (XZ) Gelenkbeschläge (205), zweite Gelenkbeschläge genannt, die an der Haube (19) befestigt sind,
- Befestigungsmittel (304), wobei die Befestigungsmittel (304) die Befestigung des Gestells (302) am Pylon (16) und oberhalb des Pylons (16) sicherstellen,
- beiderseits der vertikalen Mittelebene (XZ) zwei Gelenkbeschläge (104a-b, 204a-b), erste Gelenkbeschläge genannt, die mit dem Gestell (302) direkt fest verbunden sind, wobei jeder erste Gelenkbeschlag (104a-b, 204a-b) einem der zweiten Gelenkbeschläge (205) einer Haube (19) zugeordnet ist, um ein Scharnier (107a-b) zu bilden.

2. Anordnung (100) nach Anspruch 1, **dadurch gekennzeichnet, dass** die Befestigungsmittel (304) zwei Befestigungsbeschläge (304a-b) umfassen, die an einem oberen Längsholm (17) des Pylons (16) befestigt sind und von denen ein Befestigungsbeschlag (304a) zwischen dem oberen Längsholm (17) und einem hinteren Teil des Gestells (302) befestigt ist, und von denen ein Befestigungsbeschlag (304a) zwischen dem oberen Längsholm (17) und einem mittleren Teil des Gestells (302) befestigt ist, dadurch, dass die Befestigungsmittel (304) außerdem zwei Schubstangen (304c-d) umfassen, die beiderseits der vertikalen Mittelebene (XZ) angeordnet sind, und dadurch, dass jede Schubstange (304c-d) an einem ersten Ende am oberen Längsholm (17) und an einem zweiten Ende an einem vorderen Teil des Gestells (302) gelenkig angebracht ist.

3. Anordnung (200) nach Anspruch 1, **dadurch gekennzeichnet, dass** die Befestigungsmittel (304) einen Befestigungsbeschlag (304) umfassen, der an einem oberen Längsholm (17) des Pylons (16) zwischen dem oberen Längsholm (17) und einem mittleren Teil des Gestells (302) befestigt ist, und dadurch, dass ein hinterer Teil des Gestells (302) direkt am oberen Längsholm (17) befestigt ist.

4. Anordnung (100, 200) nach einem der Ansprüche 1 bis 3, **dadurch gekennzeichnet, dass** die Gondel (18) außerdem eine sekundäre Struktur (22) umfasst, die den oberen Teil der Gondel (18) bildet, dadurch, dass die sekundäre Struktur (22) von einem Zugangsfenster (222) durchbrochen ist, das vertikal über dem Wärmetauscher (102, 202) angeordnet ist, und dadurch, dass die sekundäre Struktur (22) eine Wärmetauscherhaube (220) umfasst, die das Zugangsfenster (222) lösbar verschließt.

5. Anordnung (100, 200) nach Anspruch 4, **dadurch gekennzeichnet, dass** sie vier Befestigungslaschen (212) umfasst, die mit dem Wärmetauscher (102, 202) fest verbunden sind und paarweise beiderseits der vertikalen Mittelebene (XZ) verteilt sind, und dass für jede Befestigungslasche (212) eine Bohrung (604a-d) die Befestigungslasche (212) durchquert und den Durchgang einer Schraube ermöglicht, welche die Befestigungslasche (212) am Gestell (302) befestigt und welche durch das Zugangsfenster (222) hindurch zugänglich ist, wenn die Wärmetauscherhaube (220) abgenommen ist.

6. Anordnung (100, 200) nach Anspruch 5, **dadurch gekennzeichnet, dass** die Bohrung (604a) der ersten Befestigungslasche (221), die sich auf der Backbordseite vorn befindet, einen Durchmesser aufweist, der an den Durchmesser des Gewindeschaftes (602) der Schraube angepasst ist, dadurch, dass die Bohrung (604b) der zweiten Befestigungslasche (221), die sich auf der Backbordseite hinten befindet, die Form eines ersten Langlochs aufweist, dessen große Achse parallel zu einer Längsrichtung (X) ist und dessen Abmessung quer zur großen Achse an den Durchmesser des Gewindeschaftes (602) der Schraube angepasst ist, dadurch, dass die Bohrung (604c) der dritten Befestigungslasche (221), die sich auf der Steuerbordseite vorn befindet, die Form eines zweiten Langlochs aufweist, dessen große Achse parallel zu einer Querrichtung (Y) ist und dessen Abmessung quer zur großen Achse an den Durchmesser des Gewindeschaftes (602) der Schraube angepasst ist, und dadurch, dass die Bohrung (604d) der vierten Befestigungslasche (221), die sich auf der Steuerbordseite hinten befindet, die Form eines dritten Langlochs aufweist, dessen große Achse parallel zur Querrichtung (Y) ist und dessen Abmessung quer zur großen Achse im Vergleich zum Durchmesser des Gewindeschaftes (602) der Schraube groß ist.

7. Anordnung (100, 200) nach einem der Ansprüche 1 bis 6, **dadurch gekennzeichnet, dass** sie, von hinten nach vorn, ein halbschwimmendes Scharnier (107b) zwischen der Haube (19) und dem Gestell (302) und zwei schwimmende Scharniere (107b) zwischen den zwei Hauben (19) umfasst.

8. Anordnung (100, 200) nach einem der Ansprüche 1 bis 6, **dadurch gekennzeichnet, dass** sie, von hinten nach vorn, drei schwimmende Scharniere (107b) zwischen den zwei Hauben (19) umfasst.

9. Anordnung (100, 200) nach einem der Ansprüche 1 bis 8, **dadurch gekennzeichnet, dass** sie einen Zufuhrkanal (108, 208) umfasst, welcher Luft kanalisiert, dadurch, dass das Gestell (302) eine Öffnung (502) umfasst, und dadurch, dass der Zufuhrkanal (108, 208) auf einer Seite des Gestells (302) dicht an dem Gestell (302) befestigt ist und an der Öffnung (502) mündet und der Wärmetauscher (102, 202) auf einer anderen Seite des Gestells (302) dicht an dem Gestell (302) befestigt ist und ebenfalls an der Öffnung (502) mündet.

10. Luftfahrzeug (10), welches ein Turbostrahltriebwerk (14), eine Tragfläche (12) und mindestens eine Anordnung (100, 200) nach einem der vorhergehenden Ansprüche umfasst, wobei der Pylon (16) zwischen dem Turbostrahltriebwerk (14) und der Tragfläche (12) befestigt ist.

## Claims

1. Assembly (100, 200) for an aircraft (10), said assembly (100, 200) having a vertical median plane (XZ) and having:
- a nacelle (18) of a jet engine (14) of the aircraft (10), wherein the nacelle (18) has, on either side of a vertical median plane (XZ), a cowl (19),
- a pylon (16) intended to be fastened between the jet engine (14) and a wing (12) of the aircraft (10),
- a heat exchanger (102, 202), and
- a support module (300) having a cradle (302) to which the heat exchanger (102, 202) is fastened,
**characterized in that** it comprises:
- on either side of the vertical median plane (XZ), articulation fittings (205), called second articulation fittings, fastened to the cowl (19),
- fastening means (304), wherein the fastening means (304) fasten the cradle (302) to the pylon (16) and above the pylon (16),
- on either side of the vertical median plane (XZ), two articulation fittings (104a-b, 204a-b), called first articulation fittings, directly secured to the cradle (302), wherein each first articulation fitting (104a-b, 204a-b) is associated with one of the second articulation fittings (205) of a cowl (19) so as to form a hinge (107a-b) .

2. Assembly (100) according to Claim 1, **characterized in that** the fastening means (304) have two fastening fittings (304a-b) that are fastened to an upper spar (17) of the pylon (16) and of which one fastening fitting (304a) is fastened between said upper spar (17) and a rear part of the cradle (302), and of which one fastening fitting (304a) is fastened between said upper spar (17) and a central part of the cradle (302), **in that** the fastening means (304) also have two rods (304c-d) disposed on either side of the vertical median plane (XZ) and **in that** each rod (304c-d) is mounted articulated by a first end to the upper spar (17) and by a second end to a front part of the cradle (302).

3. Assembly (200) according to Claim 1, **characterized in that** the fastening means (304) have a fastening fitting (304) that is fastened to an upper spar (17) of the pylon (16) between said upper spar (17) and a central part of the cradle (302), and **in that** a rear part of the cradle (302) is fastened directly to the upper spar (17).

4. Assembly (100, 200) according to one of Claims 1 to 3, **characterized in that** the nacelle (18) also has a secondary structure (22) that forms the upper part of the nacelle (18), **in that** the secondary structure (22) has an access window (222) passing through it that is disposed vertically above the heat exchanger (102, 202) and **in that** the secondary structure (22) has an exchanger cowl (220) that removably closes said access window (222) .

5. Assembly (100, 200) according to Claim 4, **characterized in that** it has four fastening tabs (212) secured to the heat exchanger (102, 202) and distributed in pairs on either side of the vertical median plane (XZ), and, for each fastening tab (212), a bore (604a-d) passes through said fastening tab (212) and allows the passage of a screw that fastens the fastening tab (212) to the cradle (302) and that is accessible through the access window (222) when the exchanger cowl (220) is removed.

6. Assembly (100, 200) according to Claim 5, **characterized in that** the bore (604a) of the first fastening tab (221), which is on the port side at the front, has a diameter adjusted to the diameter of the threaded shank (602) of the screw, **in that** the bore (604b) of the second fastening tab (221), which is on the port side at the rear, takes the form of a first oblong hole of which the major axis is parallel to a longitudinal direction (X) and of which the dimension transverse to the major axis is adjusted to the diameter of the threaded shank (602) of the screw, **in that** the bore (604c) of the third fastening tab (221), which is on the starboard side at the front, takes the form of a second oblong hole of which the major axis is parallel to a transverse direction (Y) and of which the dimension transverse to the major axis is adjusted to the diameter of the threaded shank (602) of the screw and **in that** the bore (604d) of the fourth fastening tab (221), which is on the starboard side at the rear, takes the form of a third oblong hole of which the major axis is parallel to the transverse direction (Y) and of which the dimension transverse to the major axis is wide compared with the diameter of the threaded shank (602) of the screw.

7. Assembly (100, 200) according to one of Claims 1 to 6, **characterized in that** it has, from the rear towards the front, a semi-floating hinge (107b) between the cowl (19) and the cradle (302) and two floating hinges (107b) between the two cowls (19).

8. Assembly (100, 200) according to one of Claims 1 to 6, **characterized in that** it has, from the rear towards the front, three floating hinges (107b) between the two cowls (19).

9. Assembly (100, 200) according to one of Claims 1 to 8, **characterized in that** it has a supply pipe (108, 208) that channels air, **in that** the cradle (302) has an opening (502), and **in that** the supply pipe (108, 208) is fastened in a sealed manner to the cradle (302) on one side of the cradle (302) and opens at the opening (502), and the heat exchanger (102, 202) is fastened in a sealed manner to the cradle (302) on another side of the cradle (302) and also opens at the opening (502).

10. Aircraft (10) having a jet engine (14), a wing (12) and at least one assembly (100, 200) according to one of the preceding claims wherein the pylon (16) is fastened between the jet engine (14) and the wing (12).
